# EUROPÄISCHE PATENTANMELDUNG

(11) **EP 1 304 827 A1**
(43) Veröffentlichungstag der Anmeldung: **23.04.2003**
(21) Anmeldenummer: 01123305.3
(22) Anmeldetag: 08.10.2001
(51) Int. Cl.: H04L 9/08

(54) **Sicheres Übertragungsverfahren für Daten**

(71) Anmelder: Beta Research GmbH, 85774 Unterföhring (DE)
(72) Erfinder: Löhmann, Ekkehard, 88236 Aulendorf (DE); Tücke, Peter, 81829 München (DE); Fröhlich, Hans-Hermann, 85376 Massenhausen (DE)
(74) Vertreter: Heselberger, Johannes

(57) **Zusammenfassung**

Verfahren zur Übertragung von Informationen von einem Sender an einen Empfänger, wobei die Informationen aus Daten und mindestens einem ersten Schlüssel bestehen, und wobei das Verfahren die folgenden Schritte umfasst:
a) verschlüsseln eines ersten Schlüssels mit einem zweiten Schlüssel,
b) verschlüsseln von Daten unter Verwendung des mit dem zweiten Schlüssel verschlüsselten ersten Schlüssels,
c) verschlüsseln des ersten Schlüssels mit einem dritten Schlüssel,
d) übertragen des mit dem dritten Schlüssel verschlüsselten ersten Schlüssels von dem Sender an den Empfänger,
e) übertragen der verschlüsselten Daten von dem Sender an den Empfänger,
f) entschlüsseln des mit dem dritten Schlüssel verschlüsselten ersten Schlüssels mit Hilfe eines vierten Schlüssels,
g) verschlüsseln des entschlüsselten ersten Schlüssels mit dem zweiten Schlüssel,
h) entschlüsseln der verschlüsselten Daten unter Verwendung des mit dem zweiten Schlüssel verschlüsselten ersten Schlüssels.

## Beschreibung

Die vorliegende Erfindung betrifft Verfahren zur Übertragung von Daten von einem Sender an einen Empfänger derart, dass die Daten nur von einem bestimmten Empfänger verwendet werden können, sowie jeweils einen Sender, einen Empfänger und ein Übertragungssystem zur Ausführung dieses Verfahrens.

Daten, die ein Sender zur Verfügung stellt, sollen wenn möglich nur von Empfängern verwendet werden können, die zum Empfang dieser Daten berechtigt sind. Zu diesem Zweck gibt es im Stand der Technik verschiedene Verfahren mit denen sich der berechtigte Empfänger gegenüber dem Sender authentifiziert. Ein großer Teil dieser Authentifizierungsverfahren beruht darauf, dass sowohl der Sender, als auch der Empfänger Kenntnis von einem gemeinsamen Geheimnis haben.

Im Rahmen von kostenpflichtiger Übertragung von Daten zwischen dem Sender und dem Empfänger kann es beispielsweise auch von Bedeutung sein dem Empfänger nur in Abhängigkeit von mehreren Bedingungen die Verwendung der Daten zu ermöglichen. Wenn der Empfänger dabei nicht alle Bedingungen erfüllt, kann er entweder die Daten nur mit einer beschränkten Funktionalität nutzen oder überhaupt nicht. Dabei kann der Empfänger die jeweiligen Bedingungen aufgrund unterschiedlicher Ursachen kennen.

Eine Aufgabe der Erfindung ist deshalb die Bereitstellung von Verfahren und Vorrichtungen zur Übertragung von Daten von einem Sender an einen Empfänger, insbesondere im Rahmen von Pay-TV Übertragungen, derart, dass der Empfänger wenigstens zwei Bedingungen erfüllen muss, um die Daten verwerten zu können. Eine weitere Aufgabe der vorliegenden Erfindung ist es Verfahren und Vorrichtungen bereitzustellen mit denen auf einfache Weise sichergestellt werden kann, dass nur Empfänger die eine gewisse Version einer Funktion im Empfänger aufweisen die übertragenen Daten verwenden können.

Die Lösung dieser Aufgabe besteht in dem Verfahren und der Vorrichtung wie sie in den unabhängigen Ansprüchen beschrieben sind. Erfindungsgemäß wird ein Verfahren zur Übertragung von Informationen von einem Sender an einen Empfänger bereitgestellt, wobei die Informationen aus den zu übertragenden Daten und mindestens einem ersten Schlüssel bestehen, und wobei das Verfahren die folgenden Schritte umfasst:
a) verschlüsseln eines ersten Schlüssels mit einem zweiten Schlüssel,
b) verschlüsseln von Daten unter Verwendung des mit dem zweiten Schlüssel verschlüsselten ersten Schlüssels,
c) verschlüsseln des ersten Schlüssels mit einem dritten Schlüssel,
d) übertragen des mit dem dritten Schlüssel verschlüsselten ersten Schlüssels von dem Sender an den Empfänger,
e) übertragen der verschlüsselten Daten von dem Sender an den Empfänger,
f) entschlüsseln des mit dem dritten Schlüssel verschlüsselten ersten Schlüssels mit Hilfe eines vierten Schlüssels,
g) verschlüsseln des entschlüsselten ersten Schlüssels mit dem zweiten Schlüssel,
h) entschlüsseln der verschlüsselten Daten unter Verwendung des mit dem zweiten Schlüssel verschlüsselten ersten Schlüssels.

Die zu übertragenden Informationen bestehen im Rahmen der vorliegenden Erfindung mindestens aus Daten und einem ersten Schlüssel. Die Informationen können allerdings auch noch aus weiteren Elementen bestehen. Dabei können sowohl die Daten, als auch der erste Schlüssel weiter unterteilt werden, aber auch zusätzliche Informationsarten, wie zu Beispiel Steuerungsinformationen, im Rahmen der Informationen übertragen werden.

Bei den Daten kann es sich um Daten in allen gängigen Formaten handeln. Darunter fallen beispielsweise Ton-, Bild-, und Textdaten. Diese Daten sind der Teil der Informationen, der von dem Empfänger weitergeleitet wird, um sie zum Beispiel dem Benutzer des Empfängers zu präsentieren. Bei den Daten kann es sich allerdings auch um Funktionen handeln, die im Empfänger oder in einem mit dem Empfänger verbundenen Gerät bestimmte Aufgaben übernehmen. Ein Beispiel für solche Funktionen sind Updates von der Betriebssoftware des Empfängers.

Zusammen mit den Daten wird auch mindestens ein erster Schlüssel übertragen. Im Rahmen der vorliegenden Erfindung bezeichnet Schlüssel und Verschlüsselung jede Form kontrollierter Veränderung von Informationen. Dabei ist diese Veränderung nicht auf bekannte Verschlüsselungsfunktionen begrenzt, die die Informationen in Abhängigkeit von einem Schlüssel verändern. So kann der Schlüssel im Rahmen der vorliegenden Erfindung auch die Veränderungsfunktion an sich beschreiben.

Bei dem ersten Schlüssel kann es sich beispielsweise um ein Codewort handeln, welches in regelmäßigen Abständen gewechselt wird. Ein Beispiel für ein derartiges Codewort ist eine Zufallszahl. Ein solches Codewort kann jedem Übertragungsvorgang, einer Gruppe von Übertragungsvorgängen, oder einem Teil eines Übertragungsvorgangs zugewiesen werden. Die Verwendung eines solchen Codeworts erhöht die Sicherheit der Übertragung wesentlich.

Dieser erste Schlüssel wird im Rahmen der vorliegenden Erfindung mit einem zweiten Schlüssel verschlüsselt. Bei diesem zweiten Schlüssel kann es sich um einen Schlüssel eines Verschlüsselungsverfahrens oder um ein Verschlüsselungsverfahren an sich handeln. Dieser zweite Schlüssel muss im Rahmen der vorliegenden Erfindung sowohl beim Sender als auch beim Empfänger vorliegen. Dabei müssen der Schlüssel beim Sender und der Schlüssel beim Empfänger identisch sein.

Bei dem zweiten Schlüssel kann es sich beispielsweise auch um ein Umwandlungsverfahren handeln, mit dem der erste Schlüssel umgewandelt wird. Eine Einwegfunktion oder auch ein möglichst kollisionsfreies Hashverfahren können beispielsweise in diesem Zusammenhang als Umwandlungsverfahren verwendet werden.

Im Rahmen der vorliegenden Erfindung werden in dem Sender auch die Daten verschlüsselt. Diese Verschlüsselung findet auf der Grundlage des Ergebnisses der Verschlüsselung des ersten Schlüssels mit dem zweiten Schlüssel statt. Diese Verschlüsselung der Daten kann beispielsweise eine Codierung der Daten sein, die auf der Grundlage eines umgewandelten Codeworts stattfindet.

In einem weiteren Schritt der vorliegenden Erfindung wird der erste Schlüssel unter Verwendung eines dritten Schlüssels verschlüsselt. Dieser dritte Schlüssel muss im Rahmen der vorliegenden Erfindung sowohl beim Sender als auch beim Empfänger vorliegen. Dabei müssen der Schlüssel beim Sender und der Schlüssel beim Empfänger nicht identisch sein. Denkbar ist beispielsweise auch, dass die beiden Schlüssel zu einem Schlüsselpaar eines asymmetrischen Schlüssels gehören.

Die verschlüsselten Daten werden zusammen mit dem durch den dritten Schlüssel verschlüsselten ersten Schlüssel von dem Sender an den Empfänger übertragen. Dabei kann die Übertragung dieser Informationen über jede denkbare Datenverbindung mit jedem Datenprotokoll stattfinden. Dafür muss sowohl der Sender, als auch der Empfänger über eine direkte oder indirekte Verbindung zu der Datenverbindung verfügen. Sowohl die Verbindung zu der Datenverbindung, als auch die Datenverbindung an sich können dauernde Verbindungen oder zeitlich begrenzte Verbindungen sein.

In dem Empfänger wird der mit dem dritten Schlüssel verschlüsselte erste Schlüssel entschlüsselt. Dafür wird im Rahmen der Erfindung ein vierter Schlüssel verwendet. Dabei können der dritte Schlüssel und der vierte Schlüssel gleich sein. Es ist aber auch möglich, dass der dritte Schlüssel und der vierte Schlüssel verschieden sind und beispielsweise ein Paar eines asymmetrischen Schlüssels bilden. Gemäß der Erfindung ist das Ergebnis der Entschlüsselung wieder der erste Schlüssel.

Wie bereits in dem Sender wird auch in dem Empfänger der erste Schlüssel mit einem zweiten Schlüssel verschlüsselt. Das Ergebnis dieser Verschlüsselung bildet den Schlüssel für die Entschlüsselung der übertragenen Daten.

Im Rahmen der vorliegenden Erfindung können die Schlüssel, die sowohl auf der Sendeseite, als auch auf Empfangsseite vorhanden sein sollen an unterschiedliche Voraussetzungen geknüpft sein. Der zweite Schlüssel kann beispielsweise in Abhängigkeit von der Version einer Funktion in dem Empfänger gespeichert werden. Möglich sind hier aber auch andere Abhängigkeiten, wie zum Beispiel von dem verwendeten Übertragungsmedium, oder Verarbeitungsmedium, oder in Abhängigkeit von einem vom Benutzer eingegebenen PIN.

Vorzugsweise ist der dritte Schlüssel auf einer Chipkarte in dem Empfänger gespeichert.

Im Rahmen von Pay-TV Übertragungen stellen sich besondere Probleme. Bei der Übertragung an sich handelt es sich meistens um eine sogenannte point-tomultipoint Übertragung. Das heißt, dass die Daten von einem Sender an alle Empfänger, oder zumindest an eine große Anzahl von Empfängern gesendet werden. In vielen Fällen sind aber nicht alle Empfänger berechtigt diese Daten zu verwenden. Um also die berechtigten Empfänger von den unberechtigten Empfängern unterscheiden zu können, werden die gesendeten Daten verschlüsselt und die Empfänger bekommen entsprechend ihrer Berechtigung die richtigen Schlüssel.

Um allerdings das Herausfinden eines Schlüssels für einen unberechtigten Empfänger wesentlich zu erschweren, werden die Daten mit einem regelmäßig wechselnden Schlüssel, beispielsweise einem Codewort, verschlüsselt. Dieser regelmäßig wechselnde Schlüssel wird in dem Sender so verschlüsselt, dass er nur mit Hilfe der Schlüssel, die im Besitz der berechtigten Empfänger sind, entschlüsselt werden kann. Dieser verschlüsselte Schlüssel wird dann parallel in geeigneter Weise zu den verschlüsselten Daten an die Empfänger übertragen.

Für den Sender der Daten kann es außerdem von Interesse sein, dass der Benutzer nicht nur berechtigt ist die Daten zu empfangen, sonder zusätzlich auch noch über eine weitere Eigenschaft verfügt. Im Rahmen der vorliegenden Erfindung kann diese Eigenschaft beispielsweise eine bestimmte Version einer Funktion, zum Beispiel bestimmte Software oder Hardware, in dem Empfänger sein.

Mit dem vorgenannten Verfahren ist es dem Sender möglich dem an sich berechtigten Benutzer die Verwendung der übertragenen Daten zu verwehren, wenn er nicht über eine bestimmte Voraussetzung verfügt. Diese Voraussetzung ist dann im Rahmen der vorliegenden Erfindung mit einen Schlüssel verknüpft, der hier vorzugsweise dem zweiten Schlüssel entspricht.

Im Rahmen der vorliegenden Erfindung wird des weiteren ein Verfahren zum Senden von Informationen an einen Empfänger beansprucht, wobei die Informationen aus Daten und mindestens einem ersten Schlüssel bestehen und wobei das Verfahren die folgenden Schritte umfasst:
a) verschlüsseln eines ersten Schlüssels mit einem zweiten Schlüssel,
b) verschlüsseln von Daten unter Verwendung des mit dem zweiten Schlüssel verschlüsselten ersten Schlüssels,
c) verschlüsseln des ersten Schlüssels mit einem dritten Schlüssel,
d) übertragen des mit dem dritten Schlüssel verschlüsselten ersten Schlüssels von dem Sender an den Empfänger derart, dass dieser verschlüsselte erste Schlüssel mit Hilfe eines vierten Schlüssels in dem Empfänger entschlüsselt werden kann und dann unter Verwendung des zweiten Schlüssels erneut verschlüsselt werden kann,
e) übertragen der verschlüsselten Daten von dem Sender an den Empfänger derart, dass die verschlüsselten Daten unter Verwendung des in dem Empfänger mit dem zweiten Schlüssel verschlüsselten ersten Schlüssels entschlüsselt werden können.

Außerdem wird im Rahmen der vorliegenden Erfindung ein Verfahren zum Empfangen von Informationen von einem Sender beansprucht, wobei die Informationen aus Daten und aus mindestens einem ersten Schlüssel bestehen und wobei das Verfahren die folgenden Schritte umfasst:
a) empfangen des mit einem dritten Schlüssel verschlüsselten ersten Schlüssels,
b) empfangen von Daten, die mit dem vom zweiten Schlüssel verschlüsselten ersten Schlüssel verschlüsselt wurden,
c) entschlüsseln des mit dem dritten Schlüssel verschlüsselten ersten Schlüssels mit Hilfe eines vierten Schlüssels,
d) verschlüsseln des entschlüsselten ersten Schlüssels mit dem zweiten Schlüssel,
e) entschlüsseln der verschlüsselten Daten unter Verwendung des mit dem zweiten Schlüssel verschlüsselten ersten Schlüssels.

Des weiteren wird ein Sender zum Senden von Informationen an einen Empfänger beansprucht, wobei die Informationen aus Daten und mindestens einem ersten Schlüssel bestehen und wobei der Sender derart gestaltet ist, dass er die folgenden Funktionen ausführen kann:
a) verschlüsseln eines ersten Schlüssels mit einem zweiten Schlüssel,
b) verschlüsseln von Daten unter Verwendung des mit dem zweiten Schlüssel verschlüsselten ersten Schlüssels,
c) verschlüsseln des ersten Schlüssels mit einem dritten Schlüssel,
d) übertragen des mit dem dritten Schlüssel verschlüsselten ersten Schlüssels von dem Sender an den Empfänger derart, dass dieser verschlüsselte erste Schlüssel mit Hilfe eines vierten Schlüssels in dem Empfänger entschlüsselt werden kann und dann unter Verwendung des zweiten Schlüssels erneut verschlüsselt werden kann,
e) übertragen der verschlüsselten Daten von dem Sender an den Empfänger derart, dass die verschlüsselten Daten unter Verwendung des in dem Empfänger mit dem zweiten Schlüssel verschlüsselten ersten Schlüssels entschlüsselt werden können.

Außerdem wird ein Empfänger zum Empfangen von Informationen von einem Sender beansprucht, wobei die Informationen aus Daten und einem Codewort bestehen und wobei der Empfänger derart gestaltet ist, dass er die folgenden Funktionen ausführen kann:
a) empfangen des mit einem dritten Schlüssel verschlüsselten ersten Schlüssels,
b) empfangen von Daten, die mit dem vom zweiten Schlüssel verschlüsselten ersten Schlüssel verschlüsselt wurden,
c) entschlüsseln des mit dem dritten Schlüssel verschlüsselten ersten Schlüssels mit Hilfe eines vierten Schlüssels,
d) verschlüsseln des entschlüsselten ersten Schlüssels mit dem zweiten Schlüssel,
e) entschlüsseln der verschlüsselten Daten unter Verwendung des mit dem zweiten Schlüssel verschlüsselten ersten Schlüssels.

Im Rahmen der vorliegenden Erfindung wird auch ein Übertragungssystem zur Übertragung von Informationen von einem Sender an einen Empfänger beansprucht, wobei die Informationen aus Daten und mindestens einem ersten Schlüssel bestehen, und wobei das Übertragungssystem aus einem Sender und einem Empfänger besteht, die derart gestaltet sind, dass sie die folgenden Funktionen ausführen können:
a) verschlüsseln eines ersten Schlüssels mit einem zweiten Schlüssel,
b) verschlüsseln von Daten unter Verwendung des mit dem zweiten Schlüssel verschlüsselten ersten Schlüssels,
c) verschlüsseln des ersten Schlüssels mit einem dritten Schlüssel,
d) übertragen des mit dem dritten Schlüssel verschlüsselten ersten Schlüssels von dem Sender an den Empfänger,
e) übertragen der verschlüsselten Daten von dem Sender an den Empfänger,
f) entschlüsseln des mit dem dritten Schlüssel verschlüsselten ersten Schlüssels mit Hilfe eines vierten Schlüssels,
g) verschlüsseln des entschlüsselten ersten Schlüssels mit dem zweiten Schlüssel,
h) entschlüsseln der verschlüsselten Daten unter Verwendung des mit dem zweiten Schlüssel verschlüsselten ersten Schlüssels.

Die vorliegende Erfindung bezieht sich auch auf die Verwendung eines Senders zum Senden von Informationen, wobei die Informationen aus Daten und mindestens einem ersten Schlüssel bestehen, und wobei die Informationen nach einem der oben beschriebenen Verfahren verschlüsselt und gesendet werden.

Außerdem bezieht sich die vorliegende Erfindung auf die Verwendung eines Empfängers zum Empfang von Informationen, wobei die Informationen aus Daten und mindestens einem ersten Schlüssel bestehen, und wobei die Informationen nach einem der oben beschriebenen Verfahren empfangen, verschlüsselt und entschlüsselt werden.

Im Rahmen der vorliegenden Erfindung wird außerdem ein Verfahren zur Übertragung von Informationen von einem Sender an einen Empfänger beansprucht, wobei die Informationen aus Daten und einem Codewort bestehen, und wobei das Verfahren die folgenden Schritte umfasst:
a) umwandeln des Codeworts unter Verwendung eines Umwandlungsverfahrens,
b) verschlüsseln von Daten unter Verwendung des mit dem Umwandlungsverfahren umgewandelten Codeworts,
c) verschlüsseln des Codeworts mit einem Sendeschlüssel,
d) übertragen des mit dem Sendeschlüssel verschlüsselten Codeworts von dem Sender an den Empfänger,
e) übertragen der verschlüsselten Daten von dem Sender an den Empfänger,
f) entschlüsseln des mit dem Sendeschlüssel verschlüsselten Codeworts mit Hilfe eines Empfangsschlüssels,
g) umwandeln des entschlüsselten Codeworts unter Verwendung des Umwandlungsverfahrens,
h) entschlüsseln der verschlüsselten Daten unter Verwendung des umgewandelten Codeworts.

Die vorliegende Erfindung wird beispielhaft in den Figuren 1 bis 4 dargestellt. Dabei zeigt:
- Fig. 1:: eine schematische Zeichnung eines erfindungsgemäßen Übertragungssystems,
- Fig. 2:: eine schematische Zeichnung eines erfindungsgemäßen Senders,
- Fig. 3:: eine schematische Zeichnung eines erfindungsgemäßen Empfängers, und
- Fig. 4:: ein Flussdiagramm über den Austausch des zweiten Schlüssel, wie er im Rahmen der vorliegenden Erfindung durchgeführt werden kann.

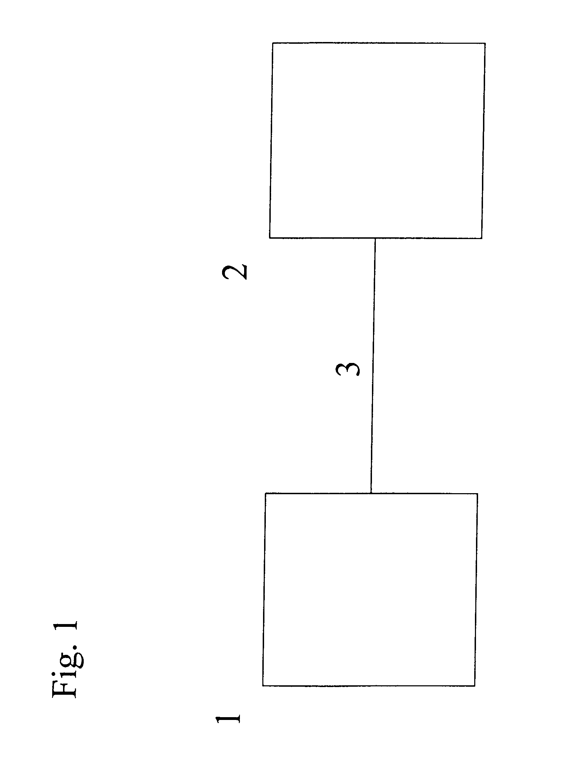

Figur 1 zeigt einen erfindungsgemäßes Übertragungssystem bestehend aus einem erfindungsgemäßen Sender 1, einen Übertragungskanal 3 und einem erfindungsgemäßen Empfänger 2. Dabei ist der Sender 1 über den Übertragungskanal 3 mit dem erfindungsgemäßen Empfänger 2 verbunden.

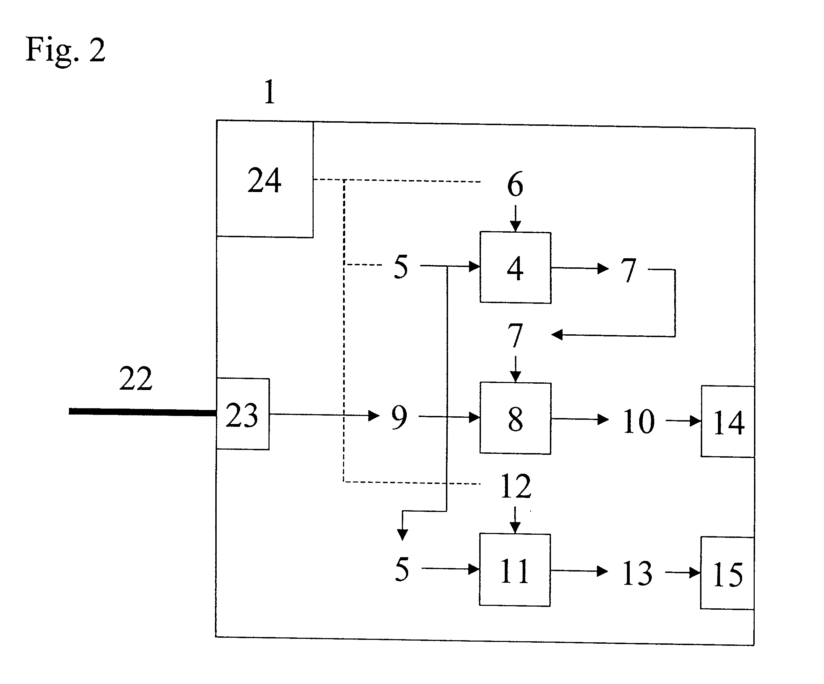

Figur 2 zeigt einen erfindungsgemäßen Sender 1, wie er im Rahmen des in Figur 1 dargestellten Übertragungssystems verwendet werden kann. Dabei besteht der Sender 1 aus einer Verschlüsselungsfunktion 4, die dazu geeignet ist einen ersten Schlüssels 5 mit einem zweiten Schlüssel 6 zu einem Schlüssel 7 zu verschlüsseln, einer Verschlüsselungsfunktion 8, die dazu geeignet ist Daten 9 mit dem Schlüssel 7 zu verschlüsselten Daten 10 zu verschlüsseln und einer Verschlüsselungsfunktion 11, die dazu geeignet ist den ersten Schlüssels 5 mit einem dritten Schlüssel 12 zu einem Schlüssel 13 zu verschlüsseln. Außerdem verfügt der Sender 1 noch über Sendefunktionen 14, 15. Dabei ist die Sendefunktion 14 dazu geeignet die verschlüsselten Daten 10 von dem Sender 1 an den Empfänger 2 über den Übertragungskanal 3 zu senden und die Sendefunktion 15 den Schlüssel 13 von dem Sender 1 über den Übertragungskanal 3 an den Empfänger 2 zu senden.

Des weiteren verfügen der Sender 1 über eine geeignete Vorrichtung, mit der die zu sendenden Daten 9 dem Sender 1 zugeführt werden können. Hierbei kann es sich beispielsweise um eine Datenleitung 22 handeln, die über eine Eingangsschnittstelle 23 mit dem Sender 1 verbunden ist. Außerdem verfügt der Sender 1 in dem Ausführungsbeispiel in Figur 1 über eine Vorrichtung 24, die dazu geeignet ist den Verschlüsselungsfunktionen 4, 11 mit dem ersten Schlüssel 5, dem zweiten Schlüssel 6 und dem dritten Schlüssel 12 zu versorgen. Bei dieser Vorrichtung 24 kann es sich beispielsweise um einen Speicher handeln. Im Rahmen der vorliegenden Erfindung ist es allerdings auch möglich, dass die Schlüssel 5, 6, 12 nicht alle von der gleichen Vorrichtungen bereitgestellt werden. Bei der Vorrichtung kann es sich beispielsweise auch um eine SmartCard handeln. Des weiteren ist es auch möglich, dass zumindest ein Schlüssel erst generiert werden muss und deshalb in keiner Vorrichtung gespeichert ist.

Bei der Verschlüsselungsfunktion 4 handelt es sich vorzugsweise um eine Einwegfunktion, in der der erste Schlüssel 5, beispielsweise ein Codewort, in Form eine Zufallszahl, mit Hilfe des zweiten Schlüssels 6, beispielsweise eine Versionsnummer und/oder Initialisierungsvektoren, zu dem Schlüssel 7, also einem verschlüsselten Codewort, verschlüsselt wird. Mit Hilfe dieses verschlüsselten Codeworts 7 werden die zu übertragenden Daten dann in einer geeigneten Verschlüsselungsfunktion 8 verschlüsselt. Das Codewort 5 selber wird mit Hilfe des dritten Schlüssels 12, beispielsweise eines von einem Produkt abhängigen Schlüssels, in einer Verschlüsselungsfunktion 11 verschlüsselt und dieses verschlüsselte Codewort 13 beispielsweise mit einer entitlement control message (ECM) an den Empfänger übertragen.

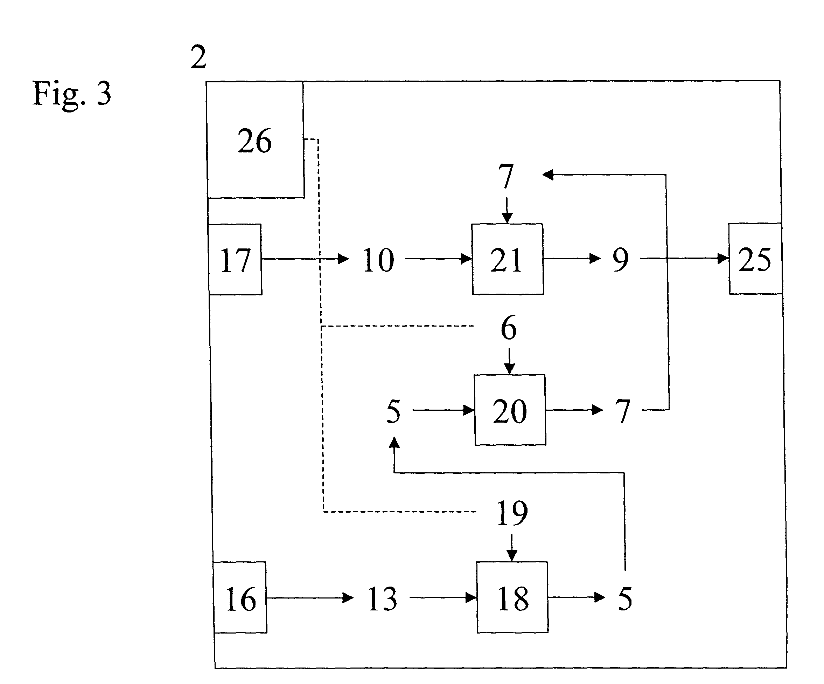

Figur 3 zeigt einen erfindungsgemäßen Empfänger 2, wie er im Rahmen des in Figur 1 dargestellten Übertragungssystems verwendet werden kann. Der Empfänger 2 verfügt über Empfangsfunktionen 16, 17. Dabei ist die Empfangsfunktion 16 geeignet den von dem Sender 1 gesendeten verschlüsselten Schlüssel 13 zu empfangen und die Empfangsfunktion 17 die vom Sender 1 gesendeten verschlüsselten Daten 10 zu empfangen. Des weiteren verfügt der Empfänger 2 über eine Entschlüsselungsfunktion 18 die dazu geeignet ist den vom Sender 1 gesendeten Schlüssel 13 mit Hilfe eines vierten Schlüssels 19 zu dem ersten Schlüssel 5, beispielsweise dem oben beschriebenen Codewort, zu entschlüsseln. Dabei kann der vierte Schlüssel 19 identisch mit dem Schlüssel 11 sein, oder auch nicht, in Abhängigkeit, ob ein symmetrisches oder ein asymmetrisches Verschlüsselungsverfahren verwendet wird. Außerdem verfügt der Empfänger 2 noch über eine Verschlüsselungsfunktion 20, die dazu geeignet ist den ersten Schlüssel 5 mit dem zweiten Schlüssel 6, beispielsweise die oben beschriebenen Versionsnummer und/oder Initialisierungsvektoren, zu dem Schlüssel 7, dem verschlüsselten Codewort, zu verschlüsseln. Unter Verwendung dieses Schlüssels 7 können in einer geeigneten Entschlüsselungsfunktion 21 die verschlüsselten Daten 10 zu den Daten 9 entschlüsselt werden.

Des weiteren verfügt der Empfänger 2 in diesem Ausführungsbeispiel über eine geeignete Vorrichtung 25, beispielsweise eine Ausgangsschnittstelle, um die entschlüsselten Daten 9 einer Verarbeitungsvorrichtung bereitzustellen. Die Daten können aber auch in dem Empfänger 2 auf einem Speicherelement gespeichert werden, welches dann aus dem Empfänger 2 entnommen werden kann. Außerdem verfügt der Empfänger in diesem Ausführungsbeispiel noch über eine Vorrichtung 26, die dazu geeignet ist den zweiten Schlüssel 6 und den vierten Schlüssel 19 der entsprechenden Entschlüsselungsfunktion 18 beziehungsweise der Verschlüsselungsfunktion 20 zur Verfügung zu stellen.

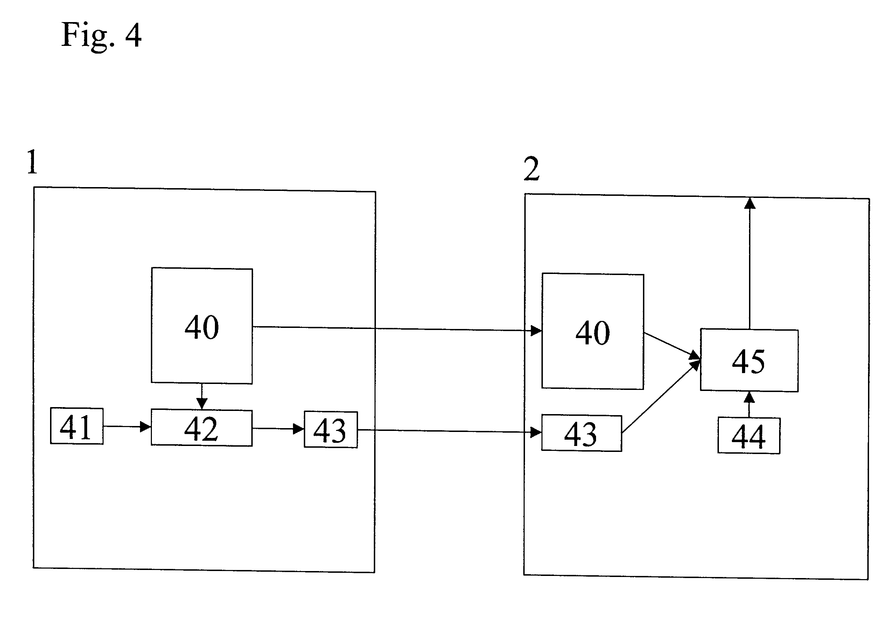

Fig. 4 zeigt anhand eines Flussdiagramms beispielhaft ein Verfahren, mit dem die Daten 40, wie beispielsweise Software mit Initialisierungsvektoren und Versionsnummer, von dem Sender 1 an den Empfänger 2 übertragen werden können. Wie bereits oben beschrieben können die Initialisierungsvektoren und/oder Versionsnummer als zweiter Schlüssel verwendet werden. Dabei wird bei dem Sender 1 mit Hilfe eines geheimen Schlüssels 41 und eines entsprechenden Verfahrens 41 eine digitale Unterschrift 43 für die zu übertragenden Daten 40, hier die Software und die damit übertragenden Initialisierungsvektoren und Versionsnummer, generiert und diese zusammen mit den Daten 40 an den Empfänger 2 übertragen. In dem Empfänger wird unter Verwendung eines öffentlichen Schlüssels 44 in einer Funktion 45 die Authentizität der empfangenen Daten 40 geprüft und die Initialisierungsvektoren und Versionsnummer als zweiter Schlüssel 6 bereitgestellt.

## Patentansprüche

1. Verfahren zur Übertragung von Informationen von einem Sender an einen Empfänger, wobei die Informationen aus Daten und mindestens einem ersten Schlüssel bestehen, und wobei das Verfahren die folgenden Schritte umfasst:
a) verschlüsseln eines ersten Schlüssels mit einem zweiten Schlüssel,
b) verschlüsseln von Daten unter Verwendung des mit dem zweiten Schlüssel verschlüsselten ersten Schlüssels,
c) verschlüsseln des ersten Schlüssels mit einem dritten Schlüssel,
d) übertragen des mit dem dritten Schlüssel verschlüsselten ersten Schlüssels von dem Sender an den Empfänger,
e) übertragen der verschlüsselten Daten von dem Sender an den Empfänger,
f) entschlüsseln des mit dem dritten Schlüssel verschlüsselten ersten Schlüssels mit Hilfe eines vierten Schlüssels,
g) verschlüsseln des entschlüsselten ersten Schlüssels mit dem zweiten Schlüssel,
h) entschlüsseln der verschlüsselten Daten unter Verwendung des mit dem zweiten Schlüssel verschlüsselten ersten Schlüssels.

2. Verfahren gemäß Anspruch 1, **dadurch gekennzeichnet, dass** es sich bei dem ersten Schlüssel um ein Codewort handelt.

3. Verfahren gemäß Anspruch 2, **dadurch gekennzeichnet, dass** es sich bei der Verschlüsselung mit einem zweiten Schlüssel um eine Umwandlung des Codeworts unter Verwendung eines Umwandlungsverfahrens handelt.

4. Verfahren gemäß Anspruch 3, **dadurch gekennzeichnet, dass** es sich bei dem Umwandlungsverfahren um eine Einwegfunktion handelt.

5. Verfahren gemäß einem der Ansprüche 3 und 4, **dadurch gekennzeichnet, dass** in Abhängigkeit von der Version einer Funktion in dem Empfänger verschiedene Umwandlungsverfahren verwendet werden.

6. Verfahren gemäß einem der Ansprüche 2 bis 5, **dadurch gekennzeichnet, dass** es sich bei der Verschlüsselung der Daten um eine Codierung der Daten auf der Grundlage des umgewandelten Codeworts handelt.

7. Verfahren gemäß einem der Ansprüche 1 bis 6, **dadurch gekennzeichnet, dass** der erste Schlüssel auf einer Chipkarte in dem Empfänger gespeichert ist.

8. Verfahren gemäß einem der Ansprüche 1 bis 7, **dadurch gekennzeichnet, dass** der dritte Schlüssel gleich dem vierten Schlüssel ist.

9. Verfahren zum Senden von Informationen an einen Empfänger, wobei die Informationen aus Daten und mindestens einem ersten Schlüssel bestehen und wobei das Verfahren die folgenden Schritte umfasst:
a) verschlüsseln eines ersten Schlüssels mit einem zweiten Schlüssel,
b) verschlüsseln von Daten unter Verwendung des mit dem zweiten Schlüssel verschlüsselten ersten Schlüssels,
c) verschlüsseln des ersten Schlüssels mit einem dritten Schlüssel,
d) übertragen des mit dem dritten Schlüssel verschlüsselten ersten Schlüssels von dem Sender an den Empfänger derart, dass dieser verschlüsselte erste Schlüssel mit Hilfe eines vierten Schlüssels in dem Empfänger entschlüsselt werden kann und dann unter Verwendung des zweiten Schlüssels erneut verschlüsselt werden kann,
e) übertragen der verschlüsselten Daten von dem Sender an den Empfänger derart, dass die verschlüsselten Daten unter Verwendung des in dem Empfänger mit dem zweiten Schlüssel verschlüsselten ersten Schlüssels entschlüsselt werden können.

10. Verfahren zum Empfangen von Informationen von einem Sender, wobei die Informationen aus Daten und aus mindestens einem ersten Schlüssel bestehen und wobei das Verfahren die folgenden Schritte umfasst:
a) empfangen des mit einem dritten Schlüssel verschlüsselten ersten Schlüssels,
b) empfangen von Daten, die mit dem vom zweiten Schlüssel verschlüsselten ersten Schlüssel verschlüsselt wurden,
c) entschlüsseln des mit dem dritten Schlüssel verschlüsselten ersten Schlüssels mit Hilfe eines vierten Schlüssels,
d) verschlüsseln des entschlüsselten ersten Schlüssels mit dem zweiten Schlüssel,
e) entschlüsseln der verschlüsselten Daten unter Verwendung des mit dem zweiten Schlüssel verschlüsselten ersten Schlüssels.

11. Sender zum Senden von Informationen an einen Empfänger, wobei die Informationen aus Daten und mindestens einem ersten Schlüssel bestehen und wobei der Sender derart gestaltet ist, dass er die folgenden Funktionen ausführen kann:
a) verschlüsseln eines ersten Schlüssels mit einem zweiten Schlüssel,
b) verschlüsseln von Daten unter Verwendung des mit dem zweiten Schlüssel verschlüsselten ersten Schlüssels,
c) verschlüsseln des ersten Schlüssels mit einem dritten Schlüssel,
d) übertragen des mit dem dritten Schlüssel verschlüsselten ersten Schlüssels von dem Sender an den Empfänger derart, dass dieser verschlüsselte erste Schlüssel mit Hilfe eines vierten Schlüssels in dem Empfänger entschlüsselt werden kann und dann unter Verwendung des zweiten Schlüssels erneut verschlüsselt werden kann,
e) übertragen der verschlüsselten Daten von dem Sender an den Empfänger derart, dass die verschlüsselten Daten unter Verwendung des in dem Empfänger mit dem zweiten Schlüssel verschlüsselten ersten Schlüssels entschlüsselt werden können.

12. Empfänger zum Empfangen von Informationen von einem Sender, wobei die Informationen aus Daten und mindestens einem ersten Schlüssel bestehen und wobei der Empfänger derart gestaltet ist, dass er die folgenden Funktionen ausführen kann:
a) empfangen des mit einem dritten Schlüssel verschlüsselten ersten Schlüssels,
b) empfangen von Daten, die mit dem vom zweiten Schlüssel verschlüsselten ersten Schlüssel verschlüsselt wurden,
c) entschlüsseln des mit dem dritten Schlüssel verschlüsselten ersten Schlüssels mit Hilfe eines vierten Schlüssels,
d) verschlüsseln des entschlüsselten ersten Schlüssels mit dem zweiten Schlüssel,
e) entschlüsseln der verschlüsselten Daten unter Verwendung des mit dem zweiten Schlüssel verschlüsselten ersten Schlüssels.

13. Übertragungssystem zur Übertragung von Informationen von einem Sender an einen Empfänger, wobei die Informationen aus Daten und mindestens einem ersten Schlüssel bestehen, und wobei das Übertragungssystem aus einem Sender und einem Empfänger besteht, die derart gestaltet sind, dass sie die folgenden Funktionen ausführen können:
a) verschlüsseln eines ersten Schlüssels mit einem zweiten Schlüssel,
b) verschlüsseln von Daten unter Verwendung des mit dem zweiten Schlüssel verschlüsselten ersten Schlüssels,
c) verschlüsseln des ersten Schlüssels mit einem dritten Schlüssel,
d) übertragen des mit dem dritten Schlüssel verschlüsselten ersten Schlüssels von dem Sender an den Empfänger,
e) übertragen der verschlüsselten Daten von dem Sender an den Empfänger,
f) entschlüsseln des mit dem dritten Schlüssel verschlüsselten ersten Schlüssels mit Hilfe eines vierten Schlüssels,
g) verschlüsseln des entschlüsselten ersten Schlüssels mit dem zweiten Schlüssel,
h) entschlüsseln der verschlüsselten Daten unter Verwendung des mit dem zweiten Schlüssel verschlüsselten ersten Schlüssels.

14. Verwendung eines Senders zum Senden von Informationen, wobei die Informationen aus Daten und mindestens einem ersten Schlüssel bestehen, und wobei die Informationen nach einem der vorhergehenden Verfahrensansprüche verschlüsselt und gesendet werden.

15. Verwendung eines Empfängers zum Empfang von Informationen, wobei die Informationen aus Daten und mindestens einem ersten Schlüssel bestehen, und wobei die Informationen nach einem der vorhergehenden Verfahrensansprüche empfangen, verschlüsselt und entschlüsselt werden.

16. Verfahren zur Übertragung von Informationen von einem Sender an einen Empfänger, wobei die Informationen aus Daten und einem Codewort bestehen, und wobei das Verfahren die folgenden Schritte umfasst:
a) umwandeln des Codeworts unter Verwendung eines Umwandlungsverfahrens,
b) verschlüsseln von Daten unter Verwendung des mit dem Umwandlungsverfahren umgewandelten Codeworts,
c) verschlüsseln des Codeworts mit einem Sendeschlüssel,
d) übertragen des mit dem Sendeschlüssel verschlüsselten Codeworts von dem Sender an den Empfänger,
e) übertragen der verschlüsselten Daten von dem Sender an den Empfänger,
f) entschlüsseln des mit dem Sendeschlüssel verschlüsselten Codeworts mit Hilfe eines Empfangsschlüssels,
g) umwandeln des entschlüsselten Codeworts unter Verwendung des Umwandlungsverfahrens,
h) entschlüsseln der verschlüsselten Daten unter Verwendung des umgewandelten Codeworts.
